# EUROPEAN PATENT APPLICATION

(11) **EP 2 775 741 A1**
(43) Date of publication of application: **10.09.2014**
(21) Application number: 12844823.0
(22) Date of filing: 02.07.2012
(51) Int. Cl.: H04W 4/12

(54) **ELECTRONIC NAME CARD EXCHANGE METHOD, TERMINAL AND SYSTEM**

(30) Priority: 02.11.2011 CN 201110341230
(71) Applicant: Tencent Technology (Shenzhen) Co., Ltd, Shenzhen, Guangdong 518000 (CN)
(72) Inventor: LUO, Cheng, Shenzhen Guangdong 518000 (CN); LIU, Wenting, Shenzhen Guangdong 518000 (CN)
(74) Representative: Rooney, John-Paul
(86) International application number: PCT/CN2012/078017
(87) International publication number: WO 2013/063949

(57) **Abstract**

The present disclosure, pertaining to the field of communication technologies, discloses a method, terminal, and system for exchanging electronic name cards. The method includes: detecting, by a first terminal, whether a second terminal is available within a predetermined distance; if the second terminal is available, sending an electronic name card to the second terminal and requesting the second terminal to send an electronic name card thereof; and receiving the electronic name card from the second terminal. The terminal includes: a detecting module, a sending module, and a receiving module. The system includes a first terminal and a second terminal. According to the present disclosure, a second terminal for exchange of name cards is found by detection, an electronic name card is automatically sent to the second terminal, the second terminal is requested to send an electronic name card thereof, thereby automatically completing the exchange of name cards. In such a process, user's operations are simpler, and electronic name cards are not exchanged over the Internet, thereby assuring information security.

## Description

This application claims priority to Chinese Patent Application No. 2011103412300, filed with Chinese Patent Office on November 2, 2011 and entitled "METHOD, TERMINAL, AND SYSTEM FOR EXCHANGING ELECTRONIC NAME CARDS", which is incorporated herein by reference in its entirety.

### TECHNICAL FIELD

The present disclosure relates to the field of wireless communication technologies, and in particular, to a method, terminal, and system for exchanging electronic name cards.

### BACKGROUND

In everyday life, people often need to exchange name cards, which contain information about their service organizations, positions, names, phone numbers, and the like, to facilitate contacts between each other. As traditional business cards are made of paper, one has to print a large number of name cards for exchanging information with several people at one time. However, paper-made name cards have the following disadvantages: 1. Inconvenient to carry. To meet more people, people needs more business cards, but it is impractical to carry all the cards needed. 2. Difficult to search. The needed information cannot be found out quickly among paper business cards. 3. Inconvenient to modify. Once one person's personal information is changed, he or she needs to reprint their business cards with the new information. 4. Prone to loss and damage, and the like.

A prior art discloses an electronic name card, for example, an address book providing the name card function. Contact information may be made into the format of a name card, and then be sent out in the form of a text message. Besides, various networks support the function of setting name cards, so that users can set their own name card information and check their friends' cards information as well.

During the implementation of the present disclosure, the inventors find that the prior art has at least the following problems:
It is relatively complex to send name cards in the form of text messages over mobile phones. A mobile phone user needs to search for and select a name card, search for and select a receiver's mobile phone number, then send the name card to the receiver. Upon receiving the name card, the receiver extracts content from the name card and stores the content into an address book thereof. In addition, information security cannot be assured since name cards are set and exchanged over the Internet.

### TSUMMARY

### SUMMARY

To address the defects that, in the prior art, exchange of electronic name cards is complicated, and Internet-based exchange of electronic name cards has poor security assurance, embodiments of the present disclosure provide a method, terminal, and system for exchanging electronic name cards. The technical solutions are as follows:
A method for exchanging electronic name card is provided. The method includes: detecting, by a first terminal, whether a second terminal is available within a predetermined distance; if the second terminal is available, sending an electronic name card to the second terminal and requesting the second terminal to send an electronic name card thereof; and receiving the electronic name card from the second terminal sending the acknowledgement.

A terminal is provided. The terminal includes: a detecting module, configured to detect whether a second terminal is available within a predetermined distance; a sending module, configured to: if the second terminal is available, send an electronic name card to the second terminal and request the second terminal to send an electronic name card thereof; and a receiving module, configured to receive the electronic name card from the second terminal.

A system for exchanging electronic name cards is provided. The system includes: a first terminal and a second terminal. The second terminal is configured to receive a request for exchanging electronic name cards from the first terminal, and send an electronic name card thereof to the first terminal.

The technical solutions provided in the embodiments of the present disclosure achieve the following beneficial effects:
A second terminal for exchange of electronic name cards is found by detection, an electronic name card is automatically sent to the second terminal, the second terminal is requested to send an electronic name card thereof, thereby automatically completing the exchange of electronic name cards. In such a process, user's operations are simpler, and electronic name cards are not exchanged over the Internet, thereby assuring information security.

### BRIEF DESCRIPTION OF THE DRAWINGS

For a better understanding of the technical solutions in the embodiments of the present disclosure, the accompanying drawings for illustrating the embodiments are briefly described below. Apparently, the accompanying drawings in the following description illustrate only some embodiments of the present disclosure, and persons of ordinary skill in the art may derive other accompanying drawings based on these accompanying drawings without any creative efforts.
FIG. 1 is a flowchart of a method for exchanging electronic name cards according to an embodiment of the present disclosure;
FIG. 2 is a flowchart of a method for exchanging electronic name cards according to an embodiment of the present disclosure;
FIG. 3 is a flowchart of authentication of an electronic name cards according to an embodiment of the present disclosure;
FIG. 4 is a schematic structural diagram of a first terminal according to an embodiment of the present disclosure;
FIG. 5 is a schematic structural diagram of a broadcast module-configured terminal according to an embodiment of the present disclosure;
FIG. 6 is a schematic structural diagram of a terminal supporting a manual mode according to an embodiment of the present disclosure;
FIG. 7 is a schematic structural diagram of a system for exchanging electronic name cards according to an embodiment of the present disclosure; and
FIG. 8 is a schematic structural diagram of an authentication server-configured system for exchanging electronic name cards according to an embodiment of the present disclosure; and

### DETAILED DESCRIPTION

To make the objectives, technical solutions, and advantages of the present disclosure clearer, the embodiments of the present disclosure are described in detail below with reference to the accompanying drawings.

### Embodiment 1

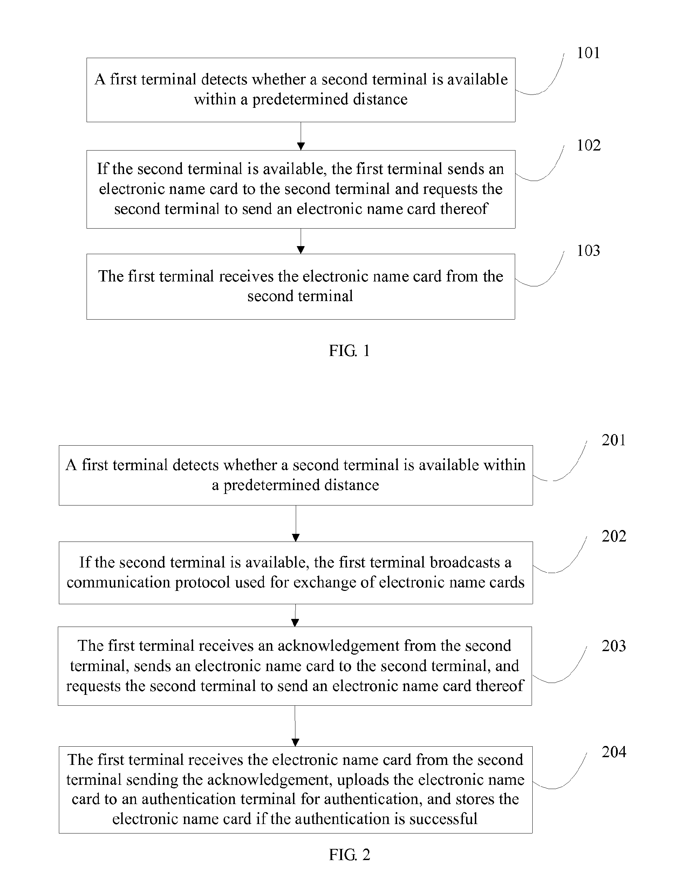

Referring to FIG. 1, an embodiment of the present disclosure provides a method for exchanging electronic name cards. The method includes:
101. A first terminal detects whether a second terminal is available within a predetermined distance.
102. If the second terminal is available, the first terminal sends an electronic name card to the second terminal and requesting the second terminal to send an electronic name card thereof.
103. The first terminal receives the electronic name card from the second terminal.

According to this embodiment, a second terminal for exchange of electronic name cards is found by detection, an electronic name card is automatically sent to the second terminal, the second terminal is requested to send an electronic name card thereof, thereby automatically completing the exchange of electronic name cards. In such a process, user's operations are simpler, and electronic name cards are not exchanged over the Internet, thereby assuring information security.

### Embodiment 2

Referring to FIG. 2, an embodiment of the present disclosure provides a method for exchanging electronic name cards. The method includes:
201. A first terminal detects whether a second terminal is available within a predetermined distance.

In this step, a Near Field Communication (NFC) chip is used to implement near field detection. Within a communication distance (within 10 cm) of the NFC chip, the NFC chip stays in a monitoring state to detect whether other second terminals equipped with an NFC chip for communication are available.

202. If the second terminal is available, the first terminal broadcasts a communication protocol used for exchange of electronic name cards.

If other second terminals are detected, the first terminal also needs to determine with which second terminal can exchange electronic name cards. The first terminal can find out such second terminals by broadcasting the communication protocol for exchanging electronic name cards. If a second terminal employs the same communication protocol as the first terminal, the second terminal can exchange electronic name cards with the first terminal.

Specifically, the content of the communication protocol broadcast for exchanging electronic name cards includes, but not limited to: protocol header, version number, protocol number, type of the first terminal, and default settings of the first terminal.

The content of the protocol header, which indicates the start position of the communication protocol, is 0x02 and is 1 byte in length.

The content of the version number, which indicates the version of the communication protocol, is 0x0100 and is 2 bytes in length. In this embodiment, the version is the first version 0x0100, where "01" indicates a parent version number, the followed "00" indicates a sub-version number, and the range of the version number is from 0x0100 to 0x9999.

The content of the protocol number is 0x0001 and its length is 2 bytes. The protocol number indicates the protocol's function number, ranging from 0x0001 to 0xffff and representing 65535 different protocol functions in total for further extension.

The content of the type of the first terminal is 0x01 and is 1 byte in length. The content indicates different terminal types, ranging from 0x01 to 0xff and representing 256 different terminal types. For example, "0x01" indicates a common mobile phone, "0x02" indicates a corporate name card terminal, "0x03" indicates a common pad, and the like.

The content of the default settings of the first terminal is 0x01, which is 2 bytes in length and indicates the functions that may be enabled by default. Each binary bit represents a default setting, and 2 bytes (16 bits) represent the function status of 16 default settings. "0" indicates that the function is disabled, and "1" indicates that the function is enabled. For example, the first bit represents whether to receive a request for exchanging name cards from a peer by default. To enable the function, the binary expression is set to "0000 0000 0000 0001". To disable the function, the binary expression set is "0000 0000 0000 0000".

Alternatively, the 2-byte content 0x01 indicates the functions that may be enabled passively by default. The content of this field is the same as the content of the default-enabled function number list field of the second terminal. If the second terminal's current settings support this function, the function of receiving business cards may only be enabled on the second terminal after the second terminal receives a request for exchanging name cards.

The above is the basic content included in the broadcast communication protocol for exchanging name cards. Some user-defined or customized fields may also be added to extend the content contained in the broadcast.

203. The first terminal receives an acknowledgement from the second terminal, sends an electronic name card to the second terminal sending the acknowledgement, and requests the second terminal to send an electronic name card thereof.

In this step, if the second terminal employs the same communication protocol as the first terminal that broadcasts the request for exchanging name cards, the second terminal may communicate with the first terminal. The second terminal sends an acknowledgement to the first terminal, where the acknowledgement includes the default settings of the second terminal. If the current default settings in the acknowledgement indicate receiving the electronic name card, the first terminal may directly send an electronic name card to the second terminal; if the default settings in the acknowledgement indicate not receiving the electronic name card, the first terminal send a request for exchanging electronic name cards to the second terminal sending the acknowledgement; and if the second terminal receives the request for exchanging electronic name cards, the first terminal sends an electronic name card to the second terminal sending the acknowledgement.

In this step, when the second terminal receives the request for exchanging electronic name cards, the first terminal may send an electronic business card to the second terminal sending the acknowledgement. The first terminal's function of sending an electronic business card may be set to a manual mode. The manual mode is as follows: The first terminal prompts a user as whether to send an electronic name card to the second terminal, where the user may manually select whether to send an electronic name card; the second terminal may also supports a manual mode in the case of the first terminal adopting the manual mode, and the second terminal also prompts a user as whether to receive the electronic name card upon receiving the electronic name card from the first terminal, where the user may manually select whether to receive the electronic name card from the first terminal, and Yes is selected if the user agrees to receive the electronic name card, the second terminal receives and saves the electronic name card, and the process of exchanging electronic name cards ends.

Further, in this step, the first terminal may also send electronic name cards in batches.

For example, when a user needs to change a terminal for exchanging electronic name cards, the user may send all the electronic name cards stored in the in-use terminal to another terminal for exchanging electronic name cards. In this manner, the user can easily copy all the electronic name cards from the original terminal when changing the terminal for exchanging electronic name cards. Exchange of electronic name cards in batches differs from one-to-one single electronic name card exchange in that, the one-to-one single electronic name card exchange involves only one electronic name card of a terminal, whereas the exchange of electronic name cards in batches involves all electronic name cards of both sides in the exchange. The electronic name cards that the first terminal receives in batches inevitably contain duplicate ones, and thus need to be merged to avoid duplicate ones. The process of merging the received electronic name cards to avoid duplicate ones is detailed as follows:
Case 1: When the contact names are the same, but the phone numbers are different, the first terminal prompts the user as whether to merge.
Merge: Multiple phone numbers are recorded under the same contact name.
Not merge: A suffix identifier is added to the same contact name, and then the electronic name card is written into the electronic name card exchanging terminal.

For example:
Terminal A name: Bruch Tel: 123456;
Terminal B name: Bruch Tel: 234567;

Merge effect:
Terminal A name: Bruch Tel: 123456 Tel2: 234567;
Terminal B name: Bruch Tel: 234567 Tel2: 123456;

Non-merge effect:
Terminal A name: Bruch Tel: 123456; name: Bruch2 Tel: 234567;
Terminal B name: Bruch Tel: 234567; name: Bruch2 Tel: 123456.
Case 2: When the contact names are different, but the phone numbers are the same, the first terminal prompts the user as whether to merge.
Merge: One of the two contact names is selected as a new final name.
Not merge: Two electronic name cards are generated, but the same phone number is recorded thereunder.
Case 3: When both the contact names and the telephone names are the same, the electronic name cards are automatically merged to leave only one electronic name card, with the duplicate ones removed.
Case 4: When the contact names are different and the phone numbers are different, new electronic name cards are generated to store the contact information.

In the above four cases, electronic name cards are classified into personal electronic name cards and corporate electronic name cards. The name on a personal name card includes name and position, and the phone number on a personal card may be a mobile phone number or fixed-line phone number through which the person can be reached; the name on a corporate card is corporation's name and the phone number on a corporate card may be a telephone number or a fax number through which the corporation can be reached.

204. The first terminal receives the electronic name card from the second terminal sending the acknowledgement, uploads the electronic name card to an authentication end for authentication, and stores the electronic name card if the authentication is successful.

In this step, security authentication in the process of exchanging electronic name cards is considered in order to ensure the security of the exchange of electronic name cards between different users. The first terminal sends a security-authenticated name card with a security authentication identity (ID), and expects the electronic name card received also passes security authentication with a security authentication ID. Therefore, the electronic name card received by the first terminal needs to be authenticated. Similarly, the second terminal authenticates the card that is receives from the first terminal.

The authentication end can be an electronic name card authentication institute set up on the server. The authentication institute grants a certificate to each of the electronic name cards, which is associated with the ID of the terminal where the business card is stored. Only the terminal can request transfer of an authenticated electronic name card which is associated with the ID of the terminal. The authentication principles are as follows: Each electronic name card may be assigned one unique ID consisting of a 32-bit random character string since an ID and a unique terminal ID are uploaded with respect to the electronic name card during registration on the server. The random ID may be acquired by means of a generic program, where the random ID is referred to as a security authentication ID. Meanwhile, the uniqueness of the ID is ensured by the server. The ID and the unique terminal ID uploaded by the user is in one-to-one mapping relationship with the security authentication ID generated by the server.

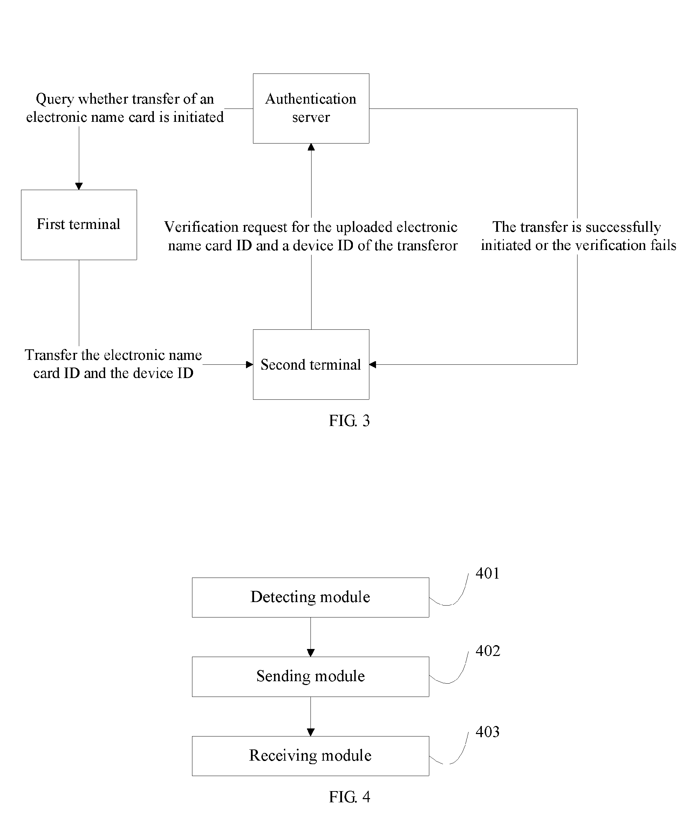

In this embodiment, the authentication end may also be an authentication server. Specifically, referring to FIG. 3, using the second terminal receiving an electronic name card as an example, the received electronic name card is processed as follows:
When the first terminal sends an electronic name card to the second terminal, the ID and terminal ID of the electronic name card are sent to the second terminal at the same time. The second terminal uploads the ID and terminal ID to the authentication server at the time of receiving the electronic name card; and the authentication server queries, according to the uploaded security authentication ID and terminal ID, the first terminal as whether transfer of an electronic name card has just been initiated. The first terminal automatically acknowledges that transfer of an electronic name card has just been initiated, and then the authentication server makes an acknowledgement to the second terminal that the electronic name card has been successfully transferred. In this case, the authentication process ends. The above method is also applicable in a scenario where the first terminal receives an electronic name card.

The authentication of the electronic name card includes several pieces of mandatory critical information, such as service organization, position, name, phone number, ID card number, and terminal ID holding the electronic name card.

Individual manner and organization manner are available to authenticate electronic business cards.

Individual manner: An individual registers on an electronic name card authentication server to acquire an account, and transfers his or her personal information and scanned identity card information; the authentication server verifies the identity of the individual, and sends an authenticated electronic name card to an electronic name card exchanging terminal of the individual if the verified result is ture, where the authenticated electronic name card has a unique ID for identify the electronic name card.

Organization manner: An organization registers on an electronic name card authentication server to acquire an account, and transfers organization's information and organization Code; the authentication server verifies the identity of the organization, and sends an authenticated electronic name card to an electronic name card exchanging terminal of the organization if the verified result is ture, where the authenticated electronic name card has a unique ID for identify the electronic name card.

The electronic name card may also be security-authenticated using such universal generic encryption means as Secure Sockets Layer (SSL). Similar encryption means may be designed by paying fees to a third-party organization, thereby implementing security authentication of an electronic name card.

The electronic name card may be applied in institutions or organizations, such as catering and business companies, where a mobile terminal for exchanging electronic name cards with a built-in NFC chip can be placed in the guest area. When a guest carries his or her electronic name card exchanging mobile terminal, such as a mobile phone, closer to the organization's mobile terminal, the NFC chip can detect his or her mobile terminal and send a broadcast request for exchanging electronic name cards, then the guest's mobile terminal can receive the request for exchanging electronic name cards. If the guest selects to receive the electronic name card either manually or automatically, the electronic name card is conveniently distributed, thereby achieving an effect of leaflet distribution.

According to this embodiment, a second terminal that can be communicated is detected using an NFC chip and a communication protocol is broadcast, a second terminal for exchange of electronic name cards is found, thereby automatically completing the exchange of electronic name cards without complicated operation. In addition, the received electronic name cards are security-authenticated, and the successfully authenticated electronic name cards are stored, thereby ensuring security of the exchange of electronic name cards and authenticity of the received electronic name cards.

### Embodiment 3

Referring to FIG. 4, an embodiment of the present disclosure provides a first terminal. The first terminal includes: a detecting module 401, configured to detect whether a second terminal is available within a predetermined distance; a sending module 402, configured to: if the second terminal is available, send an electronic name card to the second terminal and request the second terminal to send an electronic name card thereof; and a receiving module 403, configured to receive the electronic name card from the second terminal.

Specifically, the detecting module 401 employs an NFC chip and is configured to detect whether the second terminal is available within the predetermined distance.

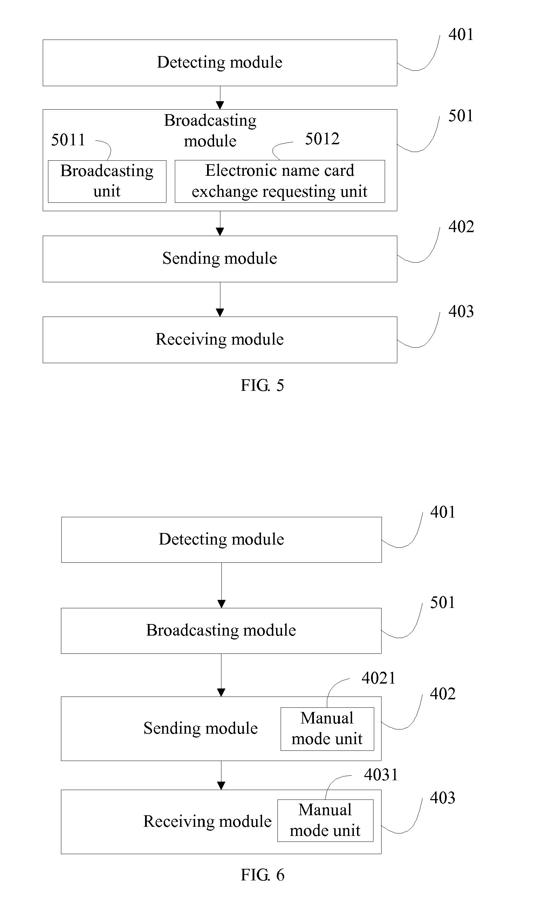

Referring to FIG. 5, the first terminal further includes: a broadcasting module 501, where the broadcasting module 501 includes a broadcasting unit 5011, configured to broadcast a communication protocol used for exchange of electronic name cards, and receive an acknowledgement compliant with the broadcast communication protocol from the second terminal.

Correspondingly, the sending module 402 sends the electronic name card to the second terminal sending the acknowledgement.

Referring to FIG. 5, the broadcasting module 501 further includes: an electronic name card exchange requesting unit 5012, configured to: if the acknowledgement is set as not receiving the electronic name card, send a request for exchanging electronic name cards to the second terminal sending the acknowledgement, and trigger the sending module 402 to send the electronic name card to the second terminal sending the acknowledgement if the second terminal receives the request for exchanging electronic name cards.

Referring to FIG. 6, the sending module 402 further includes: a manual mode unit 4021, configured to prompt a user as whether to send the electronic name card to the second terminal. The selection as whether to send the electronic name card to the second terminal is made by user manually.

Further, the sending module 402 is further configured to: send electronic name cards in batches to the second terminal, and request the second terminal to send electronic name cards thereof in batches.

Correspondingly, the receiving module 403 is configured to: receive the electronic name cards in batches from the second terminal, and merge the electronic name cards to avoid duplicate ones according to names and phone numbers in the electronic name cards.

The receiving module 403 is specifically configured to: prompt a user as whether to merge the electronic name cards if the names in the electronic name cards are the same but the phone numbers are different, or if the names are different but the phone numbers are the same ; or if both the names and the phone numbers are same, automatically merge the electronic name cards; or if the names are different and the phone numbers are different, automatically store the electronic name cards.

Referring to FIG. 6, the receiving module 403 further includes: a manual mode unit 4031, configured to prompt a user as whether to receive the electronic name card from the second terminal. The selection as whether to receive the electronic name card to the second terminal is made by user manually.

The sending module 402 is further configured to: send an electronic name card having a security authentication identity to the second terminal, and request the second terminal to send an electronic name card having a security authentication identity; and correspondingly, the receiving module 403 is configured to: receive the electronic name card having a security authentication identity from the second terminal, upload the electronic name card having a security authentication identity to an authentication end for authentication, and store the electronic name card received from the second terminal if the authentication is successful.

The terminal in this embodiment may be specifically such a mobile terminal as a mobile phone and a PDA etc..

According to this embodiment, a second terminal for exchange of electronic name cards is found by detection, an electronic name card is automatically sent to the second terminal, the second terminal is requested to send an electronic name card thereof, thereby automatically completing the exchange of electronic name cards. In such a process, user's operations are simpler, and electronic name cards are not exchanged over the Internet, thereby assuring information security.

### Embodiment 4

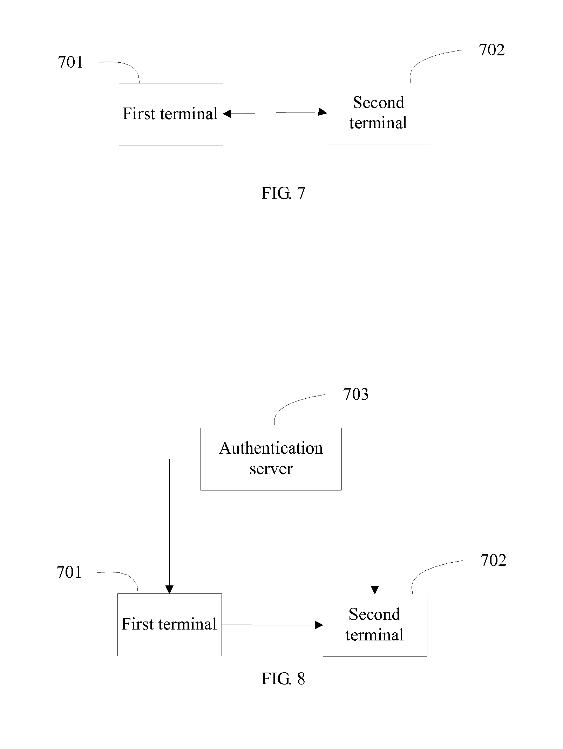

Referring to FIG. 7, an embodiment of the present disclosure provides a system for exchanging electronic name cards. The system includes: a first terminal 701 and a second terminal 702.

The second terminal 702 is configured to receive an electronic name card from the first terminal 701, and send an electronic name card thereof to the first terminal 701.

Referring to FIG. 8, the system further includes: an authentication server 703, configured to: according to an identity and a terminal identity uploaded by the first terminal 701, assign a unique security authentication identity to the electronic name card associated with the first terminal 701; and authenticate the electronic name card according to the security authentication identity received by the first terminal 701.

The first terminal 701 has the same function as the terminal described in the above-described embodiment, and includes a detecting module, a sending module, and a receiving module. The structures and functions of these modules are described in the above-described embodiment, which are not described herein any further. For details of exchanging electronic name cards between the first terminal 701 and the second terminal 701, reference may be made to the methods described in the above-described embodiments.

For details of the way the authentication server 703 authenticates the electronic name card, reference may be made to the method described in the above-described embodiment.

In this embodiment, a plurality of second terminals 702 may be used, and the first terminal 701 may exchange electronic name cards with the plurality of the second terminals 702 simultaneously.

According to the embodiments of the present disclosure, during automatic exchange of electronic name cards between the first terminal and the second terminal, user's operations are simpler, and electronic name cards are not exchanged over the Internet, thereby assuring information security.

It should be noted that, during exchange of electronic name cards by the terminal provided in the above embodiment, the terminal is described by only using division of the above functional modules as an example. In practice, the functions may be assigned to different functional modules for implementation as required. To be specific, in terms of the internal structure, the apparatus is divided into different functional modules to implement all or part of the above-described functions. In addition, the terminal is based on the same inventive concept as the method for exchanging electronic name cards provided in the embodiments of the present disclosure, where the specific implementation is elaborated in the method embodiments, which is not detailed herein any further.

A person skilled in the art should understand that all or part of steps of the preceding methods may be implemented by hardware or hardware following instructions of programs. The programs may be stored in a non-transitory computer-readable storage medium and may be executed by at least one processor. The storage medium may be a read-only memory, a magnetic disk, or a compact disc-read only memory.

Described above are merely preferred embodiments of the present disclosure, but are not intended to limit the present disclosure. Any modification, equivalent replacement, or improvement made without departing from the spirit and principle of the present disclosure should fall within the protection scope of the present disclosure.

## Claims

1. A method for exchanging electronic name cards, comprising:
detecting, by a first terminal, whether a second terminal is available within a predetermined distance;
if the second terminal is available, sending an electronic name card to the second terminal and requesting the second terminal to send an electronic name card thereof; and
receiving the electronic name card from the second terminal.

2. The method according to claim 1, wherein the detecting, by a first terminal, whether a second terminal is available within a predetermined distance comprises:
detecting, by the first terminal using near field communication (NFC), whether the second terminal is available within the predetermined distance.

3. The method according to claim 1, wherein prior to the sending an electronic name card to the second terminal, the method further comprises:
broadcasting, by the first terminal, a communication protocol used for exchange of electronic name cards, and receiving an acknowledgement compliant with the broadcast communication protocol from the second terminal; and
correspondingly, the sending an electronic name card to the second terminal comprises:
sending, by the first terminal, the electronic name card to the second terminal sending the acknowledgement.

4. The method according to claim 3, wherein prior to the sending an electronic name card to the second terminal sending the acknowledgement, the method further comprises:
if the acknowledgement is set as not receiving the electronic name card, sending, by the first terminal, a request for exchanging electronic name cards to the second terminal sending the acknowledgement, and sending the electronic name card to the second terminal sending the acknowledgement if the second terminal receives the request for exchanging electronic name cards.

5. The method according to claim 1, wherein the sending an electronic name card to the second terminal comprises:
setting a manual mode, and prompting a user as whether to send the electronic name card to the second terminal, and sending the electronic name card to the second terminal if the user manually selects YES.

6. The method according to claim 1, wherein the sending an electronic name card to the second terminal, and requesting the second terminal to send an electronic name card thereof comprises:
sending electronic name cards in batches to the second terminal, and requesting the second terminal to send electronic name cards thereof in batches; and
correspondingly, the receiving the electronic name card from the second terminal comprises:
receiving the electronic name cards in batches from the second terminal, and merging the electronic name cards to avoid duplicate ones according to names and phone numbers in the sent electronic name cards and the received electronic name cards.

7. The method according to claim 6, wherein the merging the electronic name cards to avoid duplicate ones according to names and phone numbers in the sent electronic name cards and the received electronic name cards specifically comprises:
comparing names and phone numbers in the sent electronic name cards with names and phone numbers in the received electronic name cards;
if the names are the same, but the phone numbers are different, prompting a user as whether to merge the electronic name cards; or
if the names are different, but the phone numbers are the same, prompting a user as whether to merge the electronic name cards; or
if both the names and the phone numbers are same, automatically merging the electronic name cards; or
if the names are different and the phone numbers are different, automatically storing the electronic name cards.

8. The method according to claim 1, wherein the receiving the electronic name card from the second terminal comprises:
setting a manual mode, and prompting a user as whether to receive the electronic name card from the second terminal, and receive the electronic name card from the second terminal if the user manually selects YES.

9. The method according to claim 1, wherein the sending an electronic name card to the second terminal, and requesting the second terminal to send an electronic name card thereof comprises:
sending an electronic name card having a security authentication identity to the second terminal, and requesting the second terminal to send an electronic name card having a security authentication identity; and
correspondingly, the receiving the electronic name card from the second terminal comprises:
receiving the electronic name card having a security authentication identity from the second terminal, uploading the electronic name card having a security authentication identity to an authentication end for authentication, and storing the electronic name card received from the second terminal if the authentication is successful.

10. A first terminal, comprising:
a detecting module, configured to detect whether a second terminal is available within a predetermined distance;
a sending module, configured to: if the second terminal is available, send an electronic name card to the second terminal and request the second terminal to send an electronic name card thereof; and
A receiving module, configured to receive the electronic name card from the second terminal.

11. The first terminal according to claim 10, wherein the detecting module employs an NFC chip.

12. The first terminal according to claim 10, further comprising a broadcasting module, wherein the broadcasting module comprises a broadcasting unit, configured to:
before the sending module sends the electronic name card to the second terminal, broadcast a communication protocol used for exchange of electronic name cards, and receive an acknowledgement compliant with the broadcast communication protocol from the second terminal; and
correspondingly, the sending an electronic name card by the sending module to the second terminal is specifically: sending the electronic name card to the second terminal sending the acknowledgement.

13. The first terminal according to claim 12, wherein the broadcasting module comprises an electronic name card exchange requesting unit, configured to:
if the acknowledgement is set as not receiving the electronic name card, send a request for exchanging electronic name cards to the second terminal, and trigger the sending module to send the electronic name card to the second terminal sending the acknowledgement if the second terminal receives the request for exchanging electronic name cards.

14. The first terminal according to claim 10, wherein the sending module comprises:
a manual mode unit, configured to prompt a user as whether to send the electronic name card to the second terminal, and send the electronic name card to the second terminal if the user manually selects YES.

15. The first terminal according to claim 10, wherein the sending module is configured to:
send electronic name cards in batches to the second terminal, and request the second terminal to send electronic name cards thereof in batches; and
correspondingly, the receiving module is configured to:
receive the electronic name cards in batches from the second terminal, and merge the electronic name cards to avoid duplicate ones according to names and phone numbers in the sent and received electronic name cards.

16. The first terminal according to claim 15, wherein the receiving module is specifically configured to:
compare names and phone numbers in the sent electronic name cards with names and phone numbers in the received electronic name cards;
if the names are the same, but the phone numbers are different, prompt a user as whether to merge the electronic name cards; or
if the names are different, but the phone numbers are the same, prompt a user as whether to merge the electronic name cards; or
if both the names and the phone numbers are same, automatically merge the electronic name cards; or
if both the names and the phone numbers are different, automatically store the electronic name cards.

17. The first terminal according to claim 10, wherein the receiving module comprises:
a manual mode unit, configured to prompt a user as whether to receive the electronic name card from the second terminal, and receive the electronic name card from the second terminal if the user manually selects YES.

18. The first terminal according to claim 10, wherein the sending module is configured to:
send an electronic name card having a security authentication identity to the second terminal, and request the second terminal to send an electronic name card having a security authentication identity; and
correspondingly, the receiving module is configured to: receive the electronic name card having a security authentication identity from the second terminal, upload the electronic name card having a security authentication identity to an authentication end, and store the electronic name card received from the second terminal if the authentication is successful.

19. A system for exchanging electronic name cards, comprising a first terminal and a second terminal according to any one of claims 10 to 18; wherein
the second terminal is configured to receive an electronic name card from the first terminal, and send an electronic name card thereof to the first terminal.

20. The system according to claim 19, comprising an authentication server, wherein the authentication server is configured to:
according to an identity and a terminal identity uploaded by the first terminal, assign a unique security authentication identity to the electronic name card associated with the first terminal; and
authenticate the electronic name card according to the security authentication identity received by the first terminal.
